# EUROPÄISCHE PATENTSCHRIFT

(11) **EP 1 586 783 B1**
(45) Veröffentlichungstag und Bekanntmachung des Hinweises auf die Patenterteilung: **17.12.2008**
(21) Anmeldenummer: 05007013.5
(22) Anmeldetag: 31.03.2005
(51) Int. Cl.: F16D 25/12, B60T 11/16

(54) **Hydraulikzylinder, insbesondere Geberzylinder für eine hydraulische Kupplungsbetätigung für Kraftfahrzeuge**
Hydraulic cilinder, especially trow-out cilinder for hydraulic clutch actuation in vehicles
Cylindre hydraulique, en particulier cylindre émetteur pour actionnement hydraulique d'embrayage de véhicules

(30) Priorität: 16.04.2004 DE 202004006213 U
(43) Veröffentlichungstag der Anmeldung: 19.10.2005
(73) Patentinhaber: FTE automotive GmbH, 96106 Ebern (DE)
(72) Erfinder: Tröster, Rudolf, 96169 Lauter (DE)
(74) Vertreter: Oppermann, Mark

(56) Entgegenhaltungen:
- DE-A1- 10 327 437
- DE-A1- 19 652 486
- DE-A1- 19 953 286

## Beschreibung

### TECHNISCHES GEBIET

Die vorliegende Erfindung bezieht sich auf einen Hydraulikzylinder gemäß dem Oberbegriff des Patentanspruchs 1. Insbesondere bezieht sich die Erfindung auf einen Geberzylinder für eine hydraulische Kupplungsbetätigung für Kraftfahrzeuge, wie sie massenweise im Automobilbau zum Einsatz kommen.

### STAND DER TECHNIK

Ein gattungsgemäßer Hydraulikzylinder ist aus der DE 100 28 673 A1 der Anmelderin bekannt. Bei diesen Hydraulikzylindern wird im Druckraum ein Druck erzeugt, wenn der Kolben durch Kraftbeaufschlagung über eine z.B. an einem Pedal angelenkte Druckstange bezüglich des Zylindergehäuses eine axiale Relativverschiebung erfährt. Mit diesem Druck wird etwa ein mit dem Hydraulikzylinder hydraulisch verbundener Kupplungsnehmerzylinder beaufschlagt, welcher zum Ausrücken einer Kupplung mit der Kupplung wirkverbunden ist.

Die hier betrachteten Hydraulikzylinder haben einen Kolben - aufgrund seiner Bauart auch Plungerkolben genannt - mit einer Lauffläche für (wenigstens) ein Dichtelement, und eine Ausgleichsnuten aufweisende Nachlaufeinrichtung. Das Dichtelement ist am Gehäuse des Hydraulikzylinders angebracht und dient dazu, in einer Betriebsstellung des Kolbens, d.h. bei einem in Richtung des Druckraums verschobenen Kolben im Zusammenwirken mit dessen Lauffläche den Druckraum abzudichten. Die Ausgleichsnuten der Nachlaufeinrichtung hingegen verbinden in einer Grundstellung, d.h. einer auf einen Anschlag gezogenen Stellung des Kolbens den Druckraum mit einem Nachlaufbereich, der seinerseits an einen Nachlaufbehälter angeschlossen ist, so daß Volumenschwankungen der Hydraulikflüssigkeit ausgeglichen werden, die z.B. durch Kupplungsverschleiß oder Temperaturschwankungen im System bedingt sein können.

Im Gegensatz zu "klassischen" Kolben oder Schaftkolben, die wenigstens ein Dichtelement tragen, arbeiten Plungerkolben infolge der gehäuseseitigen, d.h. stationären Anordnung des Dichtelements ausschließlich nach dem Verdrängerprinzip. Dies bedingt, daß die Hydraulikflüssigkeit bei einer Bewegung des Plungerkolbens im Druckraum nur verwirbelt wird, ohne daß maßgebliche Strömungs- oder Spüleffekte im Druckraum entstehen, wie sie bei "klassischen" Kolben oder Schaftkolben durch das kolbenseitige Dichtelement bewirkt werden. Somit ist bei Plungerkolben auch nur ein geringer Austausch von Hydraulikflüssigkeit über die Ausgleichsnuten der Nachlaufeinrichtung zum drucklosen Nachlaufbereich hin gegeben. Dementsprechend wenig werden bei Plungerkolben unerwünschte Luft- oder Gasblasen aus dem Druckraum weg zum Nachlaufbereich hin transportiert. Wird der Druckraum aber unzureichend entlüftet bzw. entgast, ergibt sich u.a. ein unerwünschtes "weiches Pedalgefühl" mit Hubverlusten beim Pedalweg.

Um für eine bessere Entlüftung bzw. -gasung eines Hydraulikzylinders mit Plungerkolben zu sorgen, wurde im Stand der Technik (DE 199 53 286 A1) bereits ein Hydraulikzylinder vorgeschlagen, dessen Gehäuse in seiner in der vorgesehenen Einbaulage des Gehäuses oberen Wandung mit einer sich in Längsrichtung des Gehäuses erstreckenden Entlüftungsnut versehen ist, deren Boden gegenüber einer Horizontalen der vorgesehenen Einbaulage des Gehäuses zu einem Entlüftungs- oder Nachlaufkanal hin ansteigend gestaltet ist.

Es hat sich jedoch gezeigt, daß eine solche Ausgestaltung für eine hinreichende Entlüftung insbesondere solcher Hydraulikzylinder unzureichend ist, bei denen der Plungerkolben stirnseitig einen in den Druckraum vorstehenden Fortsatz aufweist, etwa mit einer Haltekappe versehen ist, die der Lagerung eines Signalelements, z.B. eines Ringmagneten zur Sensierung der axialen Kolbenposition dient, wie es beispielsweise aus der DE 202 08 568 U1 der Anmelderin bekannt ist. Um hier eine größtmögliche Signalstärke zu erhalten, ist der Durchmesser des Ringmagneten konstruktiv so groß wie möglich zu wählen. Dies hat zur Folge, daß zwischen der Haltekappe bzw. dem Ringmagneten auf der einen Seite und der Zylinderwandung auf der anderen Seite nur ein verhältnismäßig kleiner Ringspalt bzw. -raum verbleibt. Beim Befüllen eines hydraulischen Systems, welches einen solchen Hydraulikzylinder aufweist, mit Hydraulikflüssigkeit hat sich nun gezeigt, daß die bei Plungerkolben wie oben bereits erwähnt ohnehin geringen Strömungs- oder Spüleffekte im Druckraum infolge des engen Ringspalts bzw. -raums zwischen Haltekappe bzw. Ringmagnet und Zylinderwandung nochmals eingeschränkt werden und sich Luft insbesondere im unteren Bereich des Ringspalts bzw. -raums in feinverteilten Blasen ansammelt, die an der Zylinderwandung anhaften und sich unter den nochmals reduzierten Strömungs- oder Spüleffekten im Druckraum nur äußerst langsam in Richtung der Nachlaufeinrichtung bewegen, wenn überhaupt. Auch die aus der DE 196 52 486 A1 bekannte Ausgestaltung des Zylindergehäuses mit einer umfangsverteilten Anordnung von Längsnuten an der Zylinderwandung, die sich ausgehend vom freien Ende der Zylinderwandung in den Druckraum hinein erstrecken und sich dabei in radialer Richtung kontinuierlich konisch verjüngen, schafft hier keine Abhilfe.

Demgemäß liegt der Erfindung ausgehend vom Stand der Technik nach der DE 100 28 673 A1 die Aufgabe zugrunde, einen möglichst einfach ausgebildeten Hydraulikzylinder mit Plungerkolben zu schaffen, der ein gegenüber dem geschilderten Stand der Technik verbessertes Entlüftungs- bzw. -gasungsverhalten aufzeigt.

### DARSTELLUNG DER ERFINDUNG

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 10.

Erfindungsgemäß ist bei einem Hydraulikzylinder, insbesondere Geberzylinder für eine hydraulische Kupplungsbetätigung für Kraftfahrzeuge, der ein eine Zylinderwandung aufweisendes Gehäuse aufweist, in dem ein Kolben längsverschieblich aufgenommen ist, der zusammen mit der Zylinderwandung einen Druckraum begrenzt und eine Lauffläche für ein gehäuseseitiges Dichtelement hat, das in einer Betriebsstellung des Kolbens mit dessen Lauffläche zusammenwirkt, um den Druckraum abzudichten, welcher in einer Grundstellung des Kolbens mittels Ausgleichsnuten einer Nachlaufeinrichtung mit einem Nachlaufbereich verbunden ist, die Zylinderwandung des Gehäuses an ihrem kolbenseitigen Ende wenigstens in einem in der Einbaulage des Zylinders unteren Bereich mit profilierten Aussparungen versehen, die jeweils eine obere Begrenzungsfläche aufweisen, welche in der Einbaulage des Zylinders zu den Ausgleichsnuten der Nachlaufeinrichtung hin ansteigt.

Nach einem Grundgedanken der Erfindung werden also (zumindest) in einem entlüftungs- bzw. -gasungskritischen Bereich des Hydraulikzylinders, d.h. einem in der Einbaulage des Zylinders unteren Bereich am kolbenseitigen Ende der Zylinderwandung des Gehäuses, der insbesondere bei einem Plungerkolben mit stirnseitig in den Druckraum vorstehenden Fortsatz, wie er etwa aus der DE 202 08 568 U1 bekannt ist, auch in der Grundstellung des Plungerkolbens in axialer Richtung typischerweise vom Plungerkolben bzw. dessen Fortsatz überdeckt wird, profilierte Aussparungen vorgesehen, die der Aufnahme feiner Luft- bzw. Gasblasen dienen. Hierbei wirken die profilierten Aussparungen quasi als Kristallisationszentren, in denen sich die feinen Luft- bzw.

Gasblasen zu etwas größeren, auftriebsstärkeren Blasen vereinigen können, welche im Ringspalt bzw. -raum zwischen der eigentlichen Zylinderwandung und dem Plungerkolben bzw. dessen Fortsatz so in der Regel nicht entstehen können. Dadurch, daß jede profilierte Aussparung des weiteren nach oben durch eine Begrenzungsfläche begrenzt ist, die in der Einbaulage des Zylinders zu den Ausgleichsnuten der Nachlaufeinrichtung hin ansteigt, wirken die profilierten Aussparungen darüber hinaus als Steighilfe für die Luft- bzw. Gasblasen, die somit ungeachtet der wie eingangs erwähnt nur sehr geringen Strömungs- oder Spüleffekte im Druckraum leicht zu den Ausgleichsnuten der Nachlaufeinrichtung hin aufsteigen können. Im Ergebnis wird auf denkbar einfache Weise für eine bessere und schnellere Entlüftung bzw. -gasung des Druckraums des Hydraulikzylinders gesorgt.

Zweckmäßig weisen die profilierten Aussparungen in einer Abwicklung der Zylinderwandung gesehen jeweils im wesentlichen die Form eines Dreiecks auf, dessen längste Seite durch die jeweilige obere Begrenzungsfläche ausgebildet ist. Wenngleich auch andere Formen für die profilierten Aussparungen denkbar sind, stellt die Dreiecksform verglichen etwa mit profilierten Aussparungen, die gekrümmte Begrenzungsflächen aufweisen, eine auch einfach herstellbare Form dar.

Grundsätzlich können die profilierten Aussparungen untere Begrenzungsflächen aufweisen, die z.B. im wesentlichen parallel zu den oberen Begrenzungsflächen verlaufen, so daß die profilierten Aussparungen an der Zylinderwandung eine rechteckgewindeartige Struktur bilden. Insbesondere in herstellungstechnischer Hinsicht bevorzugt ist es jedoch, wenn die profilierten Aussparungen jeweils eine untere Begrenzungsfläche aufweisen, die im wesentlichen parallel zur Mittelachse der Zylinderwandung des Gehäuses ausgerichtet ist.

Wenn die obere Begrenzungsfläche und/oder die untere Begrenzungsfläche jeder profilierten Aussparung mit der Zylinderwandung des Gehäuses eine Kante bildet, d.h. dort kein gerundeter Flächenübergang vorliegt, wird an diesen Stellen der Abreißwiderstand für Luft- bzw. Gasblasen vorteilhaft minimiert, so daß sich insbesondere auch kleine, auftriebsschwache Blasen von den Wandungsflächen leichter lösen und zu den Ausgleichsnuten der Nachlaufeinrichtung aufsteigen können.

In weiterer Ausgestaltung der Erfindung kann die obere Begrenzungsfläche und/oder die untere Begrenzungsfläche jeder profilierten Aussparung in vorteilhafter Weise mit einer gedachten, an die Zylinderwandung des Gehäuses im rechten Winkel zur Mittelachse der Zylinderwandung angelegten Tangente einen Winkel größer gleich 90° einschließen. Somit entstehen hier keine Hinterschnitte, die die Fertigung des Zylindergehäuses erschweren würden.

Ferner kann sich an das kolbenseitige Ende der Zylinderwandung des Gehäuses ein durchmessergrößerer Zylinderabschnitt zur Aufnahme des gehäuseseitigen Dichtelements anschließen, der über eine Ringschulter und ggf. eine Schräge mit der Zylinderwandung verbunden ist, wobei die profilierten Aussparungen in der Schräge oder der Ringschulter enden können. Bei einer solchen Ausgestaltung sind die profilierten Aussparungen also in vorteilhafter Weise nach hinten, d.h. in Richtung des Kolbens offen, was den Abtransport von Luft- bzw. Gaseinschlüssen in der Hydraulikflüssigkeit zum Nachlaufbereich hin weiter begünstigt.

Wenn die profilierten Aussparungen jeweils eine im wesentlichen konstante Tiefe aufweisen, bildet der Boden der jeweiligen profilierten Aussparung vorteilhaft eine zur Zylinderwandung im wesentlichen konzentrisch gekrümmte Fläche. Verglichen mit einer profilierten Aussparung mit einem ebenen Boden, wie sie ebenfalls denkbar ist, wird so auf kleinem Raum ein möglichst großes Aufnahmevolumen für Luft- bzw. Gasblasen geschaffen.

Im weiteren Verfolg des Erfindungsgedankens können die profilierten Aussparungen bezüglich einer gedachten Ebene, die die Mittelachse der Zylinderwandung enthält und in der Einbaulage des Zylinders im wesentlichen vertikal verläuft, spiegelsymmetrisch angeordnet sein, was für eine in beide Umfangsrichtungen gleichermaßen gute Abfuhr von Luft- bzw. Gasblasen aus dem in der Einbaulage des Zylinders unteren Bereich des Druckraums sorgt.

Des weiteren können die profilierten Aussparungen (sämtlich) unterhalb einer gedachten Ebene liegen, die die Mittelachse der Zylinderwandung enthält und in der Einbaulage des Zylinders im wesentlichen horizontal verläuft, so daß die erfindungsgemäßen Maßnahmen zur Verbesserung der Entlüftung bzw. -gasung just im Problembereich - und nur dort - vorgesehen sind.

Schließlich ist es zwar denkbar, die profilierten Aussparungen spanend in der Zylinderwandung eines z.B. metallischen Zylindergehäuses auszubilden. Bevorzugt ist es jedoch, wenn das Gehäuse unter Ausbildung der profilierten Aussparungen am kolbenseitigen Ende der Zylinderwandung aus Kunststoff spritzgegossen wird, was u.a. insofern vorteilhaft ist, als das Zylindergehäuse mit den profilierten Aussparungen in dessen Zylinderwandung in nur einem Arbeitsgang hergestellt werden kann.

### KURZE BESCHREIBUNG DER ZEICHNUNGEN

Im Folgenden wird die Erfindung anhand eines bevorzugten Ausführungsbeispiels unter Bezugnahme auf die beigefügten Zeichnungen näher erläutert. Darin zeigen:
- Fig. 1: eine abgebrochene und teilweise aufgebrochene Längsschnittansicht eines erfindungsgemäßen Geberzylinders für eine hydraulische Kupplungsbetätigung für Kraftfahrzeuge in einem gegenüber den realen Abmessungen etwas vergrößerten Maßstab,
- Fig. 2: das Detail II gemäß Fig. 1 in einem gegenüber der Fig. 1 weiter vergrößerten Maßstab und
- Fig. 3: eine abgebrochene Schnittansicht des Geberzylinders gemäß Fig. 1 entsprechend der Schnittverlaufslinie III-III in den Fig. 1 und 2 im Maßstab der Fig. 2.

### DETAILLIERTE BESCHREIBUNG EINES AUSFÜHRUNGSBEISPIELS

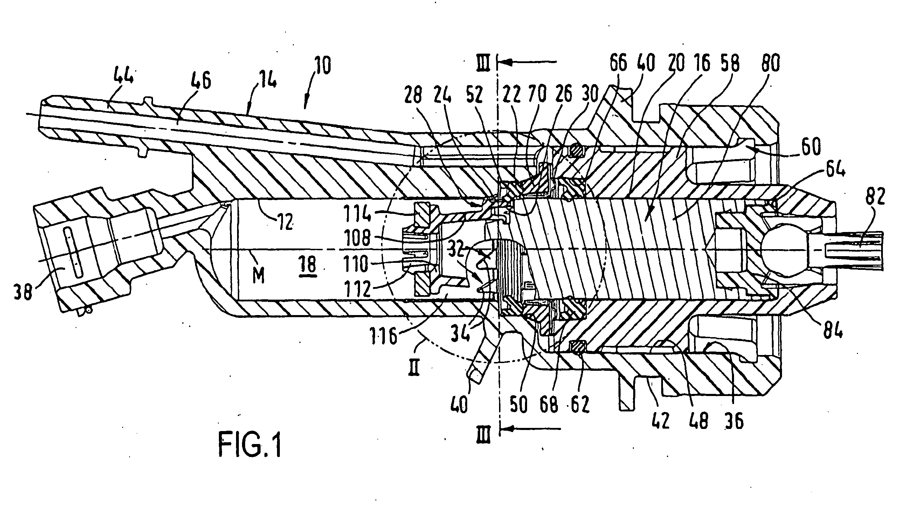

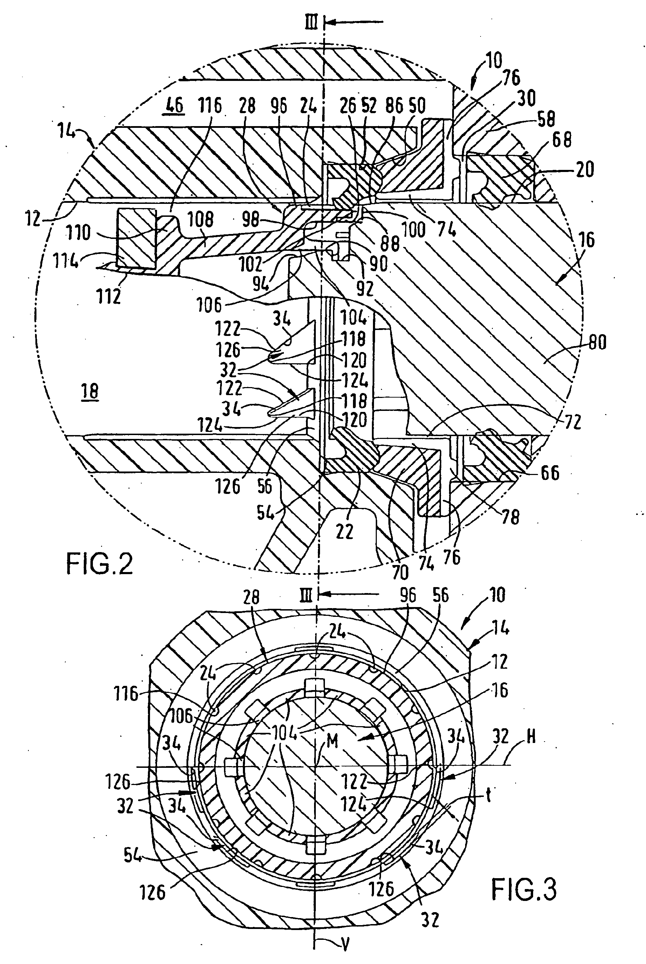

Die Fig. 1 bis 3 zeigen exemplarisch für einen Hydraulikzylinder einen Geberzylinder 10 für eine hydraulische Kupplungsbetätigung für Kraftfahrzeuge im uneingebauten, unbetätigten Zustand. Der Geberzylinder 10 hat ein eine Zylinderwandung 12 aufweisendes Gehäuse 14, in dem ein Kolben 16 längsverschieblich aufgenommen ist. Der Kolben 16 begrenzt zusammen mit der Zylinderwandung 12 einen Druckraum 18 im Gehäuse 14 und hat als Plungerkolben eine Lauffläche 20 für ein gehäuseseitiges Primärdichtelement 22, welches - ebenso wie die weiteren gummielastischen Bauteile des Geberzylinders 10 - der Einfachheit halber im unverformten Zustand eingezeichnet ist. Das Primärdichtelement 22 wirkt in einer Betriebsstellung (nicht dargestellt) des Kolbens 16, in der es sich über der Lauffläche 20 des Kolbens 16 befindet, mit der Lauffläche 20 zusammen, um den Druckraum 18 abzudichten, damit im Druckraum 18 infolge eines Hubs des Kolbens 16 nach links in den Fig. 1 und 2 ein Druck aufgebaut werden kann. In der in den Figuren gezeigten Grundstellung des Kolbens 16 indes ist der Druckraum 18 mittels Ausgleichsnuten 24, 26 einer Nachlaufeinrichtung 28 mit einem Nachlaufbereich 30 verbunden. Diese durch Verfahren des Kolbens 16 aus der gezeigten Grundstellung nach links in den Fig. 1 und 2 unterbrechbare, mittels der Nachlaufeinrichtung 28 bewirkte Verbindung zwischen dem Druckraum 18 und dem Nachlaufbereich 30 dient dazu, einen Druckausgleich zwischen dem Druckraum 18 und dem Nachlaufbereich 30 zu schaffen sowie einen Nachlauf von Hydraulikflüssigkeit vom Nachlaufbereich 30 in den Druckraum 18 hinein zu gestatten, und nicht zuletzt auch dazu, ein Entweichen von Luft oder Gas aus dem Druckraum 18 heraus über den Nachlaufbereich 30 zu ermöglichen. Wesentlich ist, daß, wie nachfolgend noch näher beschrieben werden wird, die Zylinderwandung 12 des Gehäuses 14 an ihrem kolbenseitigen, d.h. in den Fig. 1 und 2 rechten Ende wenigstens in einem in der Einbaulage des Geberzylinders 10 unteren Bereich mit profilierten Aussparungen 32 versehen ist, die jeweils eine obere Begrenzungsfläche 34 aufweisen, welche in der Einbaulage des Geberzylinders 10 zu den Ausgleichsnuten 24, 26 der Nachlaufeinrichtung 28 hin, d.h. in den Fig. 1 und 2 nach rechts ansteigt.

Das vorzugsweise aus Kunststoff unter Ausbildung u.a. der profilierten Aussparungen 32 am kolbenseitigen Ende der Zylinderwandung 12 spitzgegossene Gehäuse 14 hat ausgehend von seinem in Fig. 1 rechten Ende eine gestufte Sackbohrung 36, an deren in Fig. 1 linkem Ende ein Druckanschluß 38 vorgesehen ist, über den der Geberzylinder 10 mit einem Nehmerzylinder (nicht dargestellt) verbunden werden kann. Das Gehäuse 14 ist ferner außenumfangsseitig mit einem Befestigungsflansch 40, mittels dessen der Geberzylinder 10 an einer Spritzwand (nicht dargestellt) des Kraftfahrzeugs montiert werden kann, einer Radialnut 42 zur Aufnahme einer elastischen Abdeckung (nicht gezeigt) und einem Nachlaufanschluß 44 versehen, über den der Geberzylinder 10 an einen Nachlaufbehälter (nicht dargestellt) angeschlossen werden kann. Der Nachlaufanschluß 44 hat einen Nachlaufkanal 46, der in der Sackbohrung 36 im Nachlaufbereich 30 mündet.

Die Sackbohrung 36 des Gehäuses 14 bildet im wesentlichen vier Funktionsabschnitte mit sich in Fig. 1 von rechts nach links verkleinerndem Durchmesser aus. Ausgehend von ihrem in Fig. 1 rechten Ende hat die Sackbohrung 36 zunächst einen ersten zylindrischen Abschnitt 48, der über eine Ringschulter und einen konischen Übergangsabschnitt 50 in einen zweiten zylindrischen Abschnitt 52 übergeht, an den sich gemäß Fig. 2 über eine weitere Ringschulter 54 und eine Schräge 56 die Zylinderwandung 12 als dritter zylindrischer Abschnitt anschließt.

Im ersten zylindrischen Abschnitt 48 der Sackbohrung 36 ist eine aus Kunststoff bestehende Führungshülse 58 für den Kolben 16 mittels einer Schnappverbindung 60 befestigt. Zwischen der Führungshülse 58 und dem Gehäuse 14 ist der Geberzylinder 10 mittels einer statischen Dichtung in Form eines O-Rings 62 zur Atmosphäre hin abgedichtet. Die Führungshülse 58 bildet an ihrem in Fig. 1 rechten Ende einen Anschlag 64 für den Kolben 16 aus, der ein Herausziehen des Kolbens 16 aus dem Gehäuse 14 verhindert. An ihrem in Fig. 1 linken Ende hat die Führungshülse 58 am Innenumfang einen Absatz 66, welcher der Aufnahme eines Sekundärdichtelements 68 dient, das mit seiner dynamischen Dichtlippe stets an der Lauffläche 20 des Kolbens 16 anliegt, um den Nachlaufbereich 30 zur Atmosphäre bzw. Umgebung hin abzudichten.

Der konische Übergangsabschnitt 50 der Sackbohrung 36 dient der Zentrierung eines Stützrings 70 für das Primärdichtelement 22, der mit seinem in den Fig. 1 und 2 rechten Ende an einer ringförmigen Stirnfläche der Führungshülse 58 anliegt und somit in axialer Richtung des Gehäuses 14 festgelegt ist. Infolge der Konusaufnahme des Stützrings 70 an dem konischen Übergangsabschnitt 50 der Sackbohrung 36 stellt sich zwischen der Innenumfangsfläche des Stützrings 70 und der Lauffläche 20 des Kolbens 16 ein Ringspalt 72 von definierter Breite ein, wie Fig. 2 zeigt. Im Bereich des Ringspalts 72 ist der Stützring 70 darüber hinaus innenumfangsseitig mit einer Mehrzahl von gleichmäßig über den Umfang verteilten Längsnuten 74 versehen, die im Querschnitt gesehen eine Keilform haben, d.h. deren Tiefe sich in Fig. 2 von links nach rechts in Richtung des Sekundärdichtelements 68 kontinuierlich vergrößert. Der Ringspalt 72 und die Längsnuten 74 kommunizieren direkt mit dem Nachlaufbereich 30, welcher mit dem Nachlaufkanal 46 über Radialnuten 76 in Verbindung steht, die sich an die Längsnuten 74 anschließend in radialer Richtung über die in Fig. 2 rechte Stirnseite des Stützrings 70 erstrecken. Die Radialnuten 76 erstrecken sich hierbei auch durch eine Ringschulter 78 des Stützrings 70 hindurch, die dafür sorgt, daß das Sekundärdichtelement 68 die hydraulische Verbindung zwischen dem Nachlaufbereich 30 und dem Nachlaufkanal 46 nicht unterbrechen kann.

An dem zweiten Zylinderabschnitt 52 der Sackbohrung 36 ist das Primärdichtelement 22 positioniert und in dieser Stellung durch den Stützring 70 definiert gehalten. Schließlich bildet die Zylinderwandung 12 als dritter zylindrischer Abschnitt der Sackbohrung 36 die radiale Begrenzung für den Druckraum 18 aus.

Der im Gehäuse 14 aufgenommene Kolben 16 hat ein Hauptteil 80, im dargestellten Ausführungsbeispiel in Form eines Vollkörpers aus einem NE-Metall, etwa einer Aluminiumlegierung, an dem außenumfangsseitig die Lauffläche 20 für die gehäuseseitigen Dichtelemente 22, 68 vorgesehen ist. Am in Fig. 1 rechten Ende des Kolbens 16 ist eine Kolbenstange 82 mittels eines am Hauptteil 80 befestigten Einsatzteils 84 betätigungswirksam angelenkt. Das Einsatzteil 84 liegt in der gezeigten Grundstellung des Kolbens 16 an dem Anschlag 64 der Führungshülse 58 an.

An dem in den Fig. 1 und 2 linken Ende des Kolbens 16 ist die im dargestellten Ausführungsbeispiel separat vom Hauptteil 80 hergestellte Nachlaufeinrichtung 28 am Hauptteil 80 mittels einer Schnappverbindung spielfrei befestigt, wie es aus der DE 100 28 673 A1 der Anmelderin bekannt ist. Der Außendurchmesser der Lauffläche 20 des Hauptteils 80 ist geringfügig größer als der Außendurchmesser der Nachlaufeinrichtung 28, wobei das Hauptteil 80 zwischen der Lauffläche 20 und der Nachlaufeinrichtung 28 einen schrägen bzw. konischen Übergangsabschnitt 86 aufweist, wie in Fig. 2 zu erkennen ist. An den Übergangsabschnitt 86 des Hauptteils 80 schließt sich ein im Durchmesser reduzierter, zylindrischer Zentrierabsatz 88 für die Nachlaufeinrichtung 28 an. Das Hauptteil 80 endet mit einem nochmals im Durchmesser reduzierten, zylindrischen Befestigungsabsatz 90 für die Nachlaufeinrichtung 28, der eine Radialnut 92 zur Befestigung der Nachlaufeinrichtung 28 aufweist und endseitig mit einer Fügeschräge 94 versehen ist, um das Fügen der Nachlaufeinrichtung 28 zum Hauptteil 80 zu erleichtern.

Hinsichtlich Aufbau und Funktion der einteilig aus Kunststoff spritzgegossenen Nachlaufeinrichtung 28 sei an dieser Stelle zunächst nochmals ausdrücklich auf die DE 100 28 673 A1 der Anmelderin verwiesen. Die als Ringteil ausgebildete Nachlaufeinrichtung 28 hat gemäß Fig. 2 eine im wesentlichen zylindrische Außenumfangsfläche 96, an der in der gezeigten Grundstellung des Kolbens 16 das Primärdichtelement 22 mit seiner dynamischen Dichtlippe anliegt. Die Außenumfangsfläche 96 ist gemäß Fig. 3 mit einer Mehrzahl von - im dargestellten Ausführungsbeispiel zwölf - gleichmäßig über den Umfang verteilten Ausgleichsnuten 24 versehen, welche sich ausgehend von dem in den Fig. 1 und 2 rechten Ende der Nachlaufeinrichtung 28 in axialer Richtung der Nachlaufeinrichtung 28 erstrecken, und zwar soweit, daß sie in der dargestellten Grundstellung des Kolbens 16 über die dynamische Dichtlippe des Primärdichtelements 22 und die Schräge 56 des Gehäuses 14 in den Fig. 1 und 2 nach links hinausragen.

Ferner hat die Nachlaufeinrichtung 28 gemäß Fig. 2 eine zylindrische Innenumfangsfläche 98, mittels der sich die Nachlaufeinrichtung 28 an dem Zentrierabsatz 88 des Hauptteils 80 radial zentriert. Die Innenumfangsfläche 98 ist ebenfalls mit einer Mehrzahl von - im dargestellten Ausführungsbeispiel zwölf - gleichmäßig über den Umfang verteilten Ausgleichsnuten 26 versehen, welche sich ausgehend von dem in den Fig. 1 und 2 rechten Ende der Nachlaufeinrichtung 28 in axialer Richtung der Nachlaufeinrichtung 28 erstrecken. Gemäß insbesondere Fig. 2 ist die axiale Länge der Ausgleichsnuten 26 an der Innenumfangsfläche 98 der Nachlaufeinrichtung 28 größer als die Breite des Zentrierabsatzes 88 des Hauptteils 80.

Schließlich bildet das in den Fig. 1 und 2 rechte Ende der Nachlaufeinrichtung 28 eine Ringschulter 100 aus, mit der sich die Nachlaufeinrichtung 28 in axialer Richtung spielfrei am Hauptteil 80 abstützt. Die Ringschulter 100 ist mit einer Mehrzahl von - im dargestellten Ausführungsbeispiel zwölf - gleichmäßig umfangsverteilten Verbindungsnuten 102 versehen, welche in radialer Richtung verlaufen. Gemäß insbesondere Fig. 2 verbinden die Verbindungsnuten 102 in der Ringschulter 100 die Ausgleichsnuten 24 an der Außenumfangsfläche 96 mit den Ausgleichsnuten 26 an der Innenumfangsfläche 98 der Nachlaufeinrichtung 28.

Wie insbesondere die Fig. 2 und 3 zeigen, ist ein innerer Ringabschnitt der Nachlaufeinrichtung 28 zur Ausbildung von Federzungen 104 mehrfach geschlitzt. Jede der im dargestellten Ausführungsbeispiel acht Federzungen 104 weist endseitig eine nach radial innen vorspringende Nase auf, die gemäß Fig. 2 im am Hauptteil 80 montierten Zustand der Nachlaufeinrichtung 28 mit der am Befestigungsabsatz 90 des Hauptteils 80 vorgesehenen Radialnut 92 in Eingriff steht. Gemäß Fig. 2 sind die Schlitze zwischen den Federzungen 104 so tief ausgeführt, daß an jedem Schlitz ein Durchgang 106 zwischen der Nachlaufeinrichtung 28 und dem Befestigungsabsatz 90 des Kolbenhauptteils 80 verbleibt.

In den Fig. 1 und 2 nach links schließt sich an die Federzungen 104 ein hohler Nabenabschnitt 108 an, der sich in den Fig. 1 und 2 nach links konisch verjüngt bis er in einen Ringabschnitt 110 übergeht, an den sich wiederum innenumfangsseitig Federzungen 112 anschließen, die endseitig jeweils mit einer nach radial außen vorspringenden Nase versehen sind. Wie die Fig. 1 und 2 zeigen, bildet der Ringabschnitt 110 mit den Federzungen 112 einen Sitz für einen Ringmagnet 114 aus, der dort mittels der an den Federzungen 112 vorgesehenen Nasen lösbar gehalten und Bestandteil einer nicht weiter gezeigten Sensoreinrichtung zur Erfassung der axialen Position des Kolbens 16 im Gehäuse 14 ist. Die Nachlaufeinrichtung 28 dient also zugleich als Haltekappe zur Befestigung des Ringmagneten 114 am Kolben 16, wie es prinzipiell aus der DE 202 08 568 U1 der Anmelderin bekannt ist, auf die diesbezüglich hiermit ausdrücklich Bezug genommen wird.

Aus der obigen Beschreibung ist ersichtlich, daß in der in den Fig. 1 und 2 dargestellten Grundstellung des Kolbens 16 eine hydraulische Verbindung zwischen dem Druckraum 18 und dem Nachlaufbereich 30 besteht. Diese wird einerseits über die Ausgleichsnuten 24 an der Außenumfangsfläche 96 der Nachlaufeinrichtung 28 unter der dynamischen Dichtlippe des Primärdichtelements 22 hinweg und andererseits über den nach radial außen von den Federzungen 112, dem Ringabschnitt 110 und dem Nabenabschnitt 108 in der Nachlaufeinrichtung 28 begrenzten Hohlraum, die Durchgänge 106, den von der Innenumfangsfläche 98 nach radial außen und dem Befestigungsabsatz 90 nach radial innen begrenzten Ringraum, die Ausgleichsnuten 26 an der Innenumfangsfläche 98 und die Verbindungsnuten 102 an der Ringschulter 100 der Nachlaufeinrichtung 28 sowie im weiteren über den Ringspalt 72 zwischen der Lauffläche 20 und dem Stützring 70 und die Längsnuten 74 am Innenumfang des Stützrings 70 gewährleistet.

Die beschriebene hydraulische Verbindung zwischen dem Druckraum 18 und dem Nachlaufbereich 30 wird unterbrochen, sobald der Kolben 16 in Richtung des Druckraums 18, d.h. in den Fig. 1 und 2 nach links in eine Betriebsstellung bewegt wird, wobei die dynamische Dichtlippe des Primärdichtelements 22 mit ihrer Dichtkontur über die Lauffläche 20 des Kolbens 16 kommt und den Druckraum 18 zum Nachlaufbereich 30 hin abdichtet, damit im Druckraum 18 ein Druck aufgebaut werden kann.

Aus den Fig. 1 bis 3 ist des weiteren ersichtlich, daß ein im Verhältnis schmaler, stets mit dem Druckraum 18 kommunizierender Ringspalt bzw. Ringraum 116 nach radial außen von der Zylinderwandung 12 des Gehäuses 14 und nach radial innen von den Außenumfangsflächen des Ringmagneten 114, des Ringabschnitts 110 und des Nabenabschnitts 108 der Nachlaufeinrichtung 28 sowie der Außenumfangsfläche 96 der Nachlaufeinrichtung 28 begrenzt wird. Um diesen Ringraum 116 z.B. beim Befüllen des Geberzylinders 10 mit Hydraulikflüssigkeit insbesondere in einem in der Einbaulage des Geberzylinders 10 unteren Bereich besser zu entlüften bzw. -gasen sind die profilierte Aussparungen 32 in der Zylinderwandung 12 vorgesehen.

Wie insbesondere aus der Fig. 2 zu erkennen ist, weisen die profilierten Aussparungen 32 in einer Abwicklung der Zylinderwandung 12 gesehen jeweils im wesentlichen die Form eines Dreiecks auf, dessen längste Seite durch die jeweilige obere Begrenzungsfläche 34 ausgebildet ist, die bezüglich der Mittelachse M der Zylinderwandung 12 nach oben angestellt ist. Die sich über einen gerundeten Flächenabschnitt 118 an die obere Begrenzungsfläche 34 anschließende untere Begrenzungsfläche 120 jeder profilierten Aussparung 32 hingegen ist im wesentlichen parallel zur Mittelachse M der Zylinderwandung 12 des Gehäuses 14 ausgerichtet. Aus den Fig. 1 und 2 ist des weiteren ersichtlich, daß die profilierten Aussparungen 32 in der Schräge 56 der Sackbohrung 36 im Gehäuse 14 enden, so daß jede profilierte Aussparung 32 nach hinten, d.h. in den Fig. 1 und 2 nach rechts offen ist. Nach vorne, d.h. nach links in den Fig. 1 und 2 erstreckt sich jede der gleich geformten profilierten Aussparungen 32 in der Grundstellung des Kolbens 16 mit ihrem gerundeten Flächenabschnitt 118 als vordersten Flächenabschnitt bis über die Außenumfangsfläche 96 der Nachlaufeinrichtung 28 hinaus.

Im dargestellten Ausführungsbeispiel schließen die obere Begrenzungsfläche 34 und die untere Begrenzungsfläche 120 jeder profilierte Aussparung 32 mit einer gedachten, an die Zylinderwandung 12 des Gehäuses 14 im rechten Winkel zur Mittelachse M der Zylinderwandung 12 angelegten Tangente des weiteren einen Winkel von ca. 90° ein. Dabei bildet die obere Begrenzungsfläche 34 und die untere Begrenzungsfläche 120 jeder profilierten Aussparung 32 mit der Zylinderwandung 12 des Gehäuses 14 eine Kante 122, 124, an der sich selbst kleinere Luft- bzw. Gasblasen im Verhältnis leicht von der Zylinderwandung 12 ablösen können.

Der Fig. 3 ist zu den profilierten Aussparungen 32 weiterhin zu entnehmen, daß sie jeweils eine im wesentlichen konstante Tiefe t aufweisen, so daß die radial außen liegende Bodenfläche 126 jeder profilierten Aussparung 32 in ihrer Krümmung der Krümmung der Zylinderwandung 12 folgt oder, mit anderen Worten gesagt, bezüglich der Mittelachse M konzentrisch zur Zylinderwandung 12 verläuft. Hinsichtlich der Anordnung und Anzahl der profilierten Aussparungen 32 ist der Fig. 3 ferner zu entnehmen, daß die profilierten Aussparungen 32 bezüglich einer gedachten Ebene V, die die Mittelachse M der Zylinderwandung 12 enthält und in der Einbaulage des Geberzylinders 10 im wesentlichen vertikal verläuft, spiegelsymmetrisch angeordnet sind, wobei im dargestellten Ausführungsbeispiel zu jeder Seite der vertikalen Ebene V zwei profilierte Aussparungen 32 übereinander vorgesehen sind. Bezüglich der vertikalen Lage der profilierten Aussparungen 32 ist schließlich noch festzuhalten, daß die profilierten Aussparungen 32 im dargestellten Ausführungsbeispiel unterhalb einer gedachten Ebene H liegen, die die Mittelachse M der Zylinderwandung 12 enthält und in der Einbaulage des Geberzylinders 10 im wesentlichen horizontal verläuft.

Es wurde bereits eingangs geschildert, daß die profilierten Aussparungen 32 der Aufnahme feiner Luft- bzw. Gasblasen dienen, die insbesondere im unteren Bereich des Ringraums 116 vorhanden sein können. Hierbei wirken die profilierten Aussparungen 32 quasi als Kristallisationszentren, in denen sich die feinen Luft- bzw. Gasblasen zu etwas größeren, auftriebsstärkeren Blasen vereinigen können. Da jede profilierte Aussparung 32 nach oben durch die zu den Ausgleichsnuten 24, 26 der Nachlaufeinrichtung 28 hin ansteigende obere Begrenzungsfläche 34 begrenzt ist, wirken die profilierten Aussparungen 32 darüber hinaus als Steighilfe für die Luft- bzw. Gasblasen, die somit leicht zu den Ausgleichsnuten 24, 26 der Nachlaufeinrichtung 28 hin aufsteigen können, um von dort über den Nachlaufbereich 30 und den Nachlaufkanal 46 zum Nachlaufbehälter (nicht gezeigt) abgeführt zu werden.

Zu dem in den Figuren dargestellten Ausführungsbeispiel ist schließlich noch anzumerken, daß die Zylinderwandung 12 des Gehäuses 14 zur weiteren Verbesserung der Entlüftung bzw. Entgasung des Druckraums 18 schließlich noch mit zwei sich in axialer Richtung erstreckenden Entlüftungsnuten 128 mit im wesentlichen rechteckigen Querschnitt versehen ist. Diese gemäß Fig. 3 an oberster und unterster Position in der Zylinderwandung 12 vorgesehenen Entlüftungsnuten 128 enden wie die profilierten Aussparungen 32 in der Schräge 56 der Sackbohrung 36 und erstrecken sich in den Fig. 1 und 2 nach links in der Grundstellung des Kolbens 16 über den am Kolben 16 gehaltenen Ringmagneten 114 hinaus.

Die obige Beschreibung der Erfindung erfolgte beispielhaft an einem Geberzylinder 10 einer hydraulischen Kupplungsbetätigung für Kraftfahrzeuge. Für den Fachmann ist jedoch ersichtlich, daß die beschriebenen Maßnahmen zur Verbesserung der Zylinderentlüftung bzw. -gasung auch an anderen Hydraulikzylindern, z.B. Hauptzylindern für hydraulische Bremsanlagen in Kraftfahrzeugen Verwendung finden können.

Es wird ein Hydraulikzylinder, insbesondere Geberzylinder für eine hydraulische Kupplungsbetätigung für Kraftfahrzeuge offenbart, mit einem eine Zylinderwandung aufweisenden Gehäuse, in dem ein Kolben längsverschieblich aufgenommen ist. Der Kolben begrenzt zusammen mit der Zylinderwandung einen Druckraum und hat eine Lauffläche für ein gehäuseseitiges Dichtelement, das in einer Betriebsstellung des Kolbens mit dessen Lauffläche zusammenwirkt, um den Druckraum abzudichten, während der Druckraum in einer Grundstellung des Kolbens mittels Ausgleichsnuten einer Nachlaufeinrichtung mit einem Nachlaufbereich verbunden ist. Erfindungsgemäß ist die Zylinderwandung des Gehäuses an ihrem kolbenseitigen Ende wenigstens in einem in der Einbaulage des Zylinders unteren Bereich mit profilierten Aussparungen versehen, die jeweils eine obere Begrenzungsfläche aufweisen, welche in der Einbaulage des Zylinders zu den Ausgleichsnuten der Nachlaufeinrichtung hin ansteigt. Im Ergebnis wird ein einfach ausgebildeter Hydraulikzylinder geschaffen, der ein gegenüber dem Stand der Technik verbessertes Entlüftungsverhalten aufweist.

### BEZUGSZEICHENLISTE

- 10: Geberzylinder
- 12: Zylinderwandung
- 14: Gehäuse
- 16: Kolben
- 18: Druckraum
- 20: Lauffläche
- 22: Primärdichtelement
- 24: Ausgleichsnut
- 26: Ausgleichsnut
- 28: Nachlaufeinrichtung
- 30: Nachlaufbereich
- 32: profilierte Aussparung
- 34: obere Begrenzungsfläche
- 36: Sackbohrung
- 38: Druckanschluß
- 40: Befestigungsflansch
- 42: Radialnut
- 44: Nachlaufanschluß
- 46: Nachlaufkanal
- 48: zylindrischer Abschnitt
- 50: konischer Übergangsabschnitt
- 52: zylindrischer Abschnitt
- 54: Ringschulter
- 56: Schräge
- 58: Führungshülse
- 60: Schnappverbindung
- 62: O-Ring
- 64: Anschlag
- 66: Absatz
- 68: Sekundärdichtelement
- 70: Stützring
- 72: Ringspalt
- 74: Längsnut
- 76: Radialnut
- 78: Ringschulter
- 80: Hauptteil
- 82: Kolbenstange
- 84: Einsatzteil
- 86: Übergangsabschnitt
- 88: Zentrierabsatz
- 90: Befestigungsabsatz
- 92: Radialnut
- 94: Fügeschräge
- 96: Außenumfangsfläche
- 98: Innenumfangsfläche
- 100: Ringschulter
- 102: Verbindungsnut
- 104: Federzunge
- 106: Durchgang
- 108: Nabenabschnitt
- 110: Ringabschnitt
- 112: Federzunge
- 114: Ringmagnet
- 116: Ringraum
- 118: gerundeter Flächenabschnitt
- 120: untere Begrenzungsfläche
- 122: Kante
- 124: Kante
- 126: Bodenfläche
- 128: Entlüftungsnut

- H: horizontale Ebene
- M: Mittelachse
- t: Tiefe
- V: vertikale Ebene

## Patentansprüche

1. Hydraulikzylinder, insbesondere Geberzylinder (10) für eine hydraulische Kupplungsbetätigung für Kraftfahrzeuge, mit einem eine Zylinderwandung (12) aufweisenden Gehäuse (14), in dem ein Kolben (16) längsverschieblich aufgenommen ist, der zusammen mit der Zylinderwandung (12) einen Druckraum (18) begrenzt und eine Lauffläche (20) für ein gehäuseseitiges Dichtelement (22) hat, das in einer Betriebsstellung des Kolbens (16) mit dessen Lauffläche (20) zusammenwirkt, um den Druckraum (18) abzudichten, welcher in einer Grundstellung (Fig. 1) des Kolbens (16) mittels Ausgleichsnuten (24, 26) einer Nachlaufeinrichtung (28) mit einem Nachlaufbereich (30) verbunden ist, **dadurch gekennzeichnet, daß** die Zylinderwandung (12) des Gehäuses (14) an ihrem kolbenseitigen Ende wenigstens in einem in der Einbaulage des Zylinders (10) unteren Bereich mit profilierten Aussparungen (32) versehen ist, die jeweils eine obere Begrenzungsfläche (34) aufweisen, welche in der Einbaulage des Zylinders (10) zu den Ausgleichsnuten (24, 26) der Nachlaufeinrichtung (28) hin ansteigt.

2. Hydraulikzylinder nach Anspruch 1, **dadurch gekennzeichnet, daß** die profilierten Aussparungen (32) in einer Abwicklung der Zylinderwandung (12) gesehen jeweils im wesentlichen die Form eines Dreiecks aufweisen, dessen längste Seite durch die jeweilige obere Begrenzungsfläche (34) ausgebildet ist.

3. Hydraulikzylinder nach Anspruch 1 oder 2, **dadurch gekennzeichnet, daß** die profilierten Aussparungen (32) jeweils eine untere Begrenzungsfläche (120) aufweisen, die im wesentlichen parallel zur Mittelachse (M) der Zylinderwandung (12) des Gehäuses (14) ausgerichtet ist.

4. Hydraulikzylinder nach einem der vorhergehenden Ansprüche, **dadurch gekennzeichnet, daß** die obere Begrenzungsfläche (34) und/oder die untere Begrenzungsfläche (120) jeder profilierten Aussparung (32) mit der Zylinderwandung (12) des Gehäuses (14) eine Kante (122, 124) bildet.

5. Hydraulikzylinder nach einem der vorhergehenden Ansprüche, **dadurch gekennzeichnet, daß** die obere Begrenzungsfläche (34) und/oder eine untere Begrenzungsfläche (120) jeder profilierten Aussparung (32) mit einer gedachten, an die Zylinderwandung (12) des Gehäuses (14) im rechten Winkel zur Mittelachse (M) der Zylinderwandung (12) angelegten Tangente einen Winkel größer gleich 90° einschließt.

6. Hydraulikzylinder nach einem der vorhergehenden Ansprüche, **dadurch gekennzeichnet, daß** sich an das kolbenseitige Ende der Zylinderwandung (12) des Gehäuses (14) ein durchmessergrößerer Zylinderabschnitt (52) zur Aufnahme des gehäuseseitigen Dichtelements (22) anschließt, der über eine Ringschulter (54) und ggf. eine Schräge (56) mit der Zylinderwandung (12) verbunden ist, wobei die profilierten Aussparungen (32) in der Schräge (56) oder der Ringschulter (54) enden.

7. Hydraulikzylinder nach einem der vorhergehenden Ansprüche, **dadurch gekennzeichnet, daß** die profilierten Aussparungen (32) jeweils eine im wesentlichen konstante Tiefe (t) aufweisen.

8. Hydraulikzylinder nach einem der vorhergehenden Ansprüche, **dadurch gekennzeichnet, daß** die profilierten Aussparungen (32) bezüglich einer gedachten Ebene (V), die die Mittelachse (M) der Zylinderwandung (12) enthält und in der Einbaulage des Zylinders (10) im wesentlichen vertikal verläuft, spiegelsymmetrisch angeordnet sind.

9. Hydraulikzylinder nach einem der vorhergehenden Ansprüche, **dadurch gekennzeichnet, daß** die profilierten Aussparungen (32) unterhalb einer gedachten Ebene (H) liegen, die die Mittelachse (M) der Zylinderwandung (12) enthält und in der Einbaulage des Zylinders (10) im wesentlichen horizontal verläuft.

10. Hydraulikzylinder nach einem der vorhergehenden Ansprüche, **dadurch gekennzeichnet, daß** das Gehäuse (14) unter Ausbildung der profilierten Aussparungen (32) am kolbenseitigen Ende der Zylinderwandung (12) aus Kunststoff spritzgegossen ist.

## Claims

1. Hydraulic cylinder, in particular master cylinder (10) for a hydraulic clutch actuation system for motor vehicles, comprising a housing (14) having a cylinder wall (12), in which housing a piston (16) is received in a longitudinally displaceable manner, which piston together with the cylinder wall (12) delimits a pressure chamber (18) and has a running surface (20) for a housing-side sealing element (22) which in an operating position of the piston (16) cooperates with the running surface (20) thereof in order to seal off the pressure chamber (18), which pressure chamber in a basic position (Fig. 1) of the piston (16) is connected to an after-running region (30) by equalization grooves (24, 26) of an after-running device (28), **characterized in that** the cylinder wall (12) of the housing (14) is provided with profiled cut-outs (32) on its piston-side end at least in a lower region in the installed position of the cylinder (10), which cut-outs each have an upper boundary surface (34) which in the installed position of the cylinder (10) rises up to the equalization grooves (24, 26) of the after-running device (28).

2. Hydraulic cylinder according to Claim 1, **characterized in that** the profiled cut-outs (32), seen in a developed view of the cylinder wall (12), each have essentially the shape of a triangle, the longest side of which is formed by the respective upper boundary surface (34).

3. Hydraulic cylinder according to Claim 1 or 2, **characterized in that** the profiled cut-outs (32) each have a lower boundary surface (120) which is oriented essentially parallel to the center axis (M) of the cylinder wall (12) of the housing (14).

4. Hydraulic cylinder according to any of the preceding claims, **characterized in that** the upper boundary surface (34) and/or the lower boundary surface (120) of each profiled cut-out (32) forms an edge (122, 124) with the cylinder wall (12) of the housing (14).

5. Hydraulic cylinder according to any of the preceding claims, **characterized in that** the upper boundary surface (34) and/or a lower boundary surface (120) of each profiled cut-out (32) encloses an angle of greater than or equal to 90° with an imaginary tangent placed against the cylinder wall (12) of the housing (14) at right angles to the center axis (M) of the cylinder wall (12).

6. Hydraulic cylinder according to any of the preceding claims, **characterized in that** a larger-diameter cylinder section (52) for receiving the housing-side sealing element (22) adjoins the piston-side end of the cylinder wall (12) of the housing (14), said larger-diameter cylinder section being connected to the cylinder wall (12) via an annular shoulder (54) and possibly a bevel (56), wherein the profiled cut-outs (32) end in the bevel (56) or the annular shoulder (54).

7. Hydraulic cylinder according to any of the preceding claims, **characterized in that** the profiled cut-outs (32) each have an essentially constant depth (t).

8. Hydraulic cylinder according to any of the preceding claims, **characterized in that** the profiled cut-outs (32) are arranged in a mirror-symmetrical manner with respect to an imaginary plane (V) which contains the center axis (M) of the cylinder wall (12) and runs essentially vertically in the installed position of the cylinder (10).

9. Hydraulic cylinder according to any of the preceding claims, **characterized in that** the profiled cut-outs (32) lie below an imaginary plane (H) which contains the center axis (M) of the cylinder wall (12) and runs essentially horizontally in the installed position of the cylinder (10).

10. Hydraulic cylinder according to any of the preceding claims, **characterized in that** the housing (14) is injection-molded from plastic to form the profiled cut-outs (32) onto the piston-side end of the cylinder wall (12).

## Revendications

1. Cylindre ou vérin hydraulique, notamment maître-cylindre (10) pour un actionnement hydraulique d'embrayage de véhicules automobiles, comprenant un carter (14) présentant une paroi de cylindre (12), dans lequel est reçu en coulissement longitudinal, un piston (16) qui délimite, en commun avec la paroi de cylindre (12), une chambre de pression (18), et possède une surface de portée (20) pour un élément d'étanchéité (22) côté carter, qui, dans une position de fonctionnement du piston (16) coopère avec sa surface de portée (20) pour rendre étanche la chambre de pression (18), cette dernière étant reliée, dans une position de base (figure 1) du piston (16), à une zone d'alimentation de compensation (30) au moyen de rainures de compensation (24, 26) d'un système d'alimentation de compensation (28),
**caractérisé en ce que** la paroi de cylindre (12) du carter (14) est pourvue, à son extrémité côté piston, au moins dans une zone située dans le bas pour la position implantée du cylindre (10), d'évidements profilés (32) présentant chacun une surface de délimitation supérieure (34), qui, dans la position implantée du cylindre (10), est montante en direction des rainures de compensation (24, 26) du dispositif d'alimentation de compensation (28).

2. Cylindre hydraulique selon la revendication 1, **caractérisé en ce que** les évidements profilés (32) présentent chacun, vus dans une projection développée de la paroi de cylindre (12), sensiblement la forme d'un triangle, dont le côté le plus long est formé par la surface de délimitation supérieure (34) respective.

3. Cylindre hydraulique selon la revendication 1 ou 2, **caractérisé en ce que** les évidements profilés (32) présentent chacun une surface de délimitation inférieure (120), qui est orientée sensiblement parallèlement à l'axe central (M) de la paroi de cylindre (12) du carter (14).

4. Cylindre hydraulique selon l'une des revendications précédentes, **caractérisé en ce que** la surface de délimitation supérieure (34) et/ou la surface de délimitation inférieure (120) de chaque évidement profilé (32) forme une arête (122, 124) avec la paroi de cylindre (12) du carter (14).

5. Cylindre hydraulique selon l'une des revendications précédentes, **caractérisé en ce que** la surface de délimitation supérieure (34) et/ou la surface de délimitation inférieure (120) de chaque évidement profilé (32) forme avec une tangente fictive appliquée à angle droit à la paroi de cylindre (12) du carter (14) par rapport à l'axe central (M) de la paroi de cylindre (12), un angle supérieur ou égal à 90°.

6. Cylindre hydraulique selon l'une des revendications précédentes, **caractérisé en ce qu'**à l'extrémité côté piston de la paroi de cylindre (12) du carter (14), se raccorde un tronçon de cylindre (52) de diamètre plus grand, qui est destiné à recevoir l'élément d'étanchéité (22) côté carter, et est raccordé par l'intermédiaire d'un épaulement annulaire (54) et, le cas échéant, d'un biseau (56), à la paroi de cylindre (12), les évidements profilés (32) se terminant dans le biseau (56) ou l'épaulement annulaire (54).

7. Cylindre hydraulique selon l'une des revendications précédentes, **caractérisé en ce que** les évidements profilés (32) présentent chacun une profondeur (t) sensiblement constante.

8. Cylindre hydraulique selon l'une des revendications précédentes, **caractérisé en ce que** les évidements profilés (32) sont agencés de manière symétrique inverse par rapport à un plan fictif (V) qui renferme l'axe central (M) de la paroi de cylindre (12) et s'étend sensiblement de manière verticale dans la position implantée du cylindre (10).

9. Cylindre hydraulique selon l'une des revendications précédentes, **caractérisé en ce que** les évidements profilés (32) se situent en-dessous d'un plan fictif (H), qui renferme l'axe central (M) de la paroi de cylindre (12) et s'étend sensiblement de manière horizontale dans la position implantée du cylindre (10).

10. Cylindre hydraulique selon l'une des revendications précédentes, **caractérisé en ce que** le carter (14) est moulé par injection en matière plastique, en formant les évidements profilés (32) à l'extrémité côté piston de la paroi de cylindre (12).
